# EUROPEAN PATENT APPLICATION

(11) **EP 4 486 040 A1**
(43) Date of publication of application: **01.01.2025**
(21) Application number: 23759730.7
(22) Date of filing: 10.02.2023
(51) Int. Cl.: H04W 72/20, H04W 16/28

(54) **TERMINAL, WIRELESS COMMUNICATION METHOD, AND BASE STATION**

(30) Priority: 25.02.2022 JP 2022028484
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2023/004633
(87) International publication number: WO 2023/162726

(57) **Abstract**

To appropriately determine a TCI state. A terminal according to an aspect of the present disclosure includes: a receiving section that receives indication of a transmission configuration indication (TCI) state to be applied to a plurality of types of channels and configuration information related to a control resource set (CORESET); and a control section that controls monitoring of at least one of a CORESET with a certain index and a different CORESET except the CORESET with the certain index, on the basis of at least one of a first terminal capability and a second terminal capability, the first terminal capability being related to whether to support an operation of configuring per CORESET whether to apply the TCI state, with respect to the different CORESET, and the second terminal capability being related to whether to support the operation of configuring per CORESET whether to apply the TCI state, with respect to the CORESET with the certain index.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTR_AN); Overall description; Stage 2 (Release 8)," April, 2010

### Summary of Invention

### Technical Problem

For future radio communication systems (for example, NR), it is studied that a user terminal (terminal, User Equipment (UE)) controls transmission/reception processing, based on information related to quasi-co-location (QCL) (QCL assumption / Transmission Configuration Indication (TCI) state / spatial relation).

A unified TCI state is studied that a TCI state configured/activated/indicated is applied to a plurality of types of channels/reference signals (RSs). However, relation between a TCI state of a control resource set (CORESET) and a unified TCI state is not clear. Unless such relation is clear, degradation in communication quality, throughput reduction, and the like may be caused.

In view of this, an object of the present disclosure is to provide a terminal, a radio communication method, and a base station that appropriately determine a TCI state.

### Solution to Problem

A terminal according to an aspect of the present disclosure includes: a receiving section that receives indication of a transmission configuration indication (TCI) state to be applied to a plurality of types of channels and configuration information related to a control resource set (CORESET); and a control section that controls monitoring of at least one of a CORESET with a certain index and a different CORESET except the CORESET with the certain index, on the basis of at least one of a first terminal capability and a second terminal capability, the first terminal capability being related to whether to support an operation of configuring per CORESET whether to apply the TCI state, with respect to the different CORESET, and the second terminal capability being related to whether to support the operation of configuring per CORESET whether to apply the TCI state, with respect to the CORESET with the certain index.

### Advantageous Effects of Invention

An aspect of the present disclosure allows a TCI state to be appropriately determined.

### Brief Description of Drawings

[FIG. 1] FIGS. 1A and 1B are diagrams to show examples of a unified/common TCI framework.
[FIG. 2] FIG. 2 is a diagram to show an example of determination of application of a TCI state according to a first embodiment.
[FIG. 3] FIG. 3 is a diagram to show an example of determination of application of a TCI state according to a third embodiment.
[FIG. 4] FIG. 4 is a diagram to show another example of the determination of application of the TCI state according to the third embodiment.
[FIG. 5] FIG. 5 is a diagram to show an example of determination of application of a TCI state according to a fourth embodiment.
[FIG. 6] FIG. 6 is a diagram to show another example of the determination of application of the TCI state according to the fourth embodiment.
[FIG. 7] FIG. 7 is a diagram to show an example of a schematic structure of a radio communication system according to one embodiment.
[FIG. 8] FIG. 8 is a diagram to show an example of a structure of a base station according to one embodiment.
[FIG. 9] FIG. 9 is a diagram to show an example of a structure of a user terminal according to one embodiment.
[FIG. 10] FIG. 10 is a diagram to show an example of a hardware structure of the base station and the user terminal according to one embodiment.
[FIG. 11] FIG. 11 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have a different parameter(s) (or a parameter set(s)) that can be assumed to be the same, and such parameters (which may be referred to as QCL parameters) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Unified/common TCI Framework)

With a unified TCI framework, UL and DL channels can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam / unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥1) of TCI states (UL TCI states) to be applied to a channel/RS for UL and the number M (≥1) of TCI states (DL TCI states) to be applied to a channel/RS for DL may be defined. At least one of N and M may be notified/configured/indicated for the UE through higher layer signaling/physical layer signaling.

In the present disclosure, when N = M = X (X is any integer) is described, this may mean that X TCI states (corresponding to X TRPs) (joint TCI states) common to UL and DL are notified/configured/indicated for the UE. When N = X (X is any integer) and M = Y (Y is any integer and Y may be Y = X) are described, this may mean that X UL TCI states (corresponding to X TRPs) and Y DL TCI states (corresponding to Y TRPs) (i.e., separate TCI states) are notified/configured/indicated for the UE.

For example, when N = M = 1 is described, this may mean that one TCI state common to UL and DL for a single TRP is notified/configured/indicated for the UE (a joint TCI state for a single TRP).

For example, when N = 1 and M = 1 are described, this may mean that one UL TCI state and one DL TCI state for a single TRP are separately notified/configured/indicated for the UE (separate TCI states for a single TRP).

For example, when N = M = 2 is described, this may mean that a plurality of (two) TCI states common to UL and DL for a plurality of (two) TRPs are notified/configured/indicated for the UE (joint TCI states for a plurality of TRPs).

For example, when N = 2 and M = 2 are described, this may mean that a plurality of (two) UL TCI states and a plurality of (two) DL TCI states for a plurality of (two) TRPs are notified/configured/indicated for the UE (separate TCI states for a plurality of TRPs).

Note that, in the example described above, a case is described where the value of each of N and M is one or two, but the value of each of N and M may be three or more and N may be different from M.

For Rel. 17, it is studied that N = M = 1 is supported. For Rel. 18 or later versions, it is studied that another case is supported.

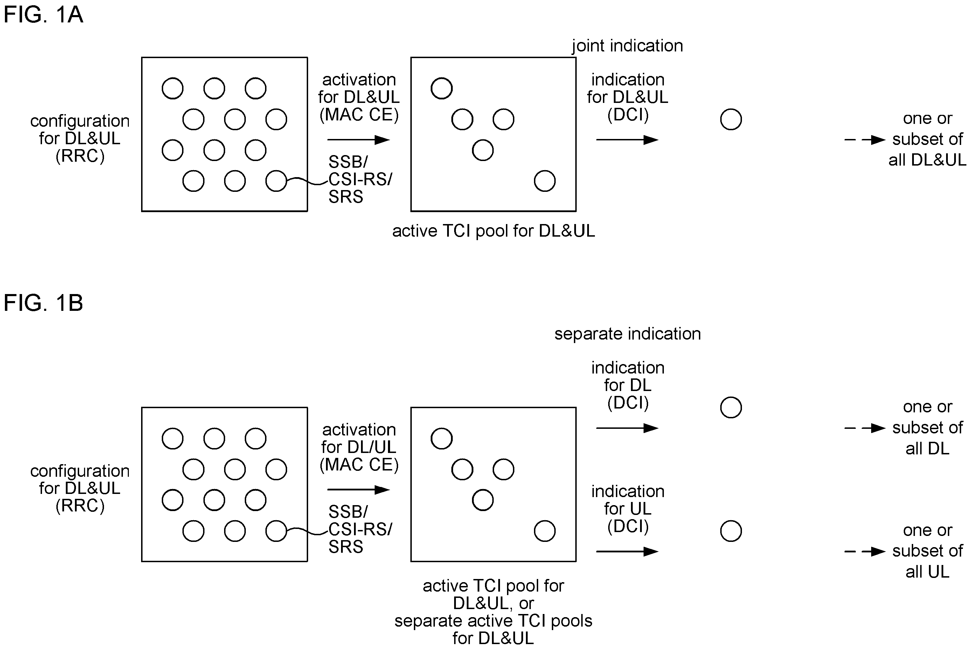

In an example in FIG. 1A, an RRC parameter (information element) configures a plurality of TCI states for both DL and UL. The MAC CE may activate a plurality of TCI states among the plurality of configured TCI states. DCI may indicate one of the plurality of activated TCI states. The DCI may be UL/DL DCI. The indicated TCI state may be applied to at least one (or all) of UL/DL channels/RSs. One piece of DCI may indicate both a UL TCI and a DL TCI.

In the example in FIG. 1A, one dot may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In an example in FIG. 1B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

DCI for beam indication with respect to a unified/common TCI state may be DCI format 1_1/1_2 with DL assignment (scheduling).

DCI for beam indication with respect to a unified/common TCI state may be DCI format 1_1/1_2 without DL assignment (scheduling) or may be a new DCI format. This is useful when there is no DL data but beam indication with respect to a unified/common TCI state.

### (QCL Rule)

A Rel-17 unified TCI state (indicated/updated by a MAC CE/DCI in Rel. 17) may be shared with UE-dedicated reception on PDSCH/PDCCH.

A QCL rule for a Rel-17 unified TCI state may vary depending on whether the Rel-17 unified TCI state is shared with UE-dedicated reception on PDSCH/PDCCH.

For a channel/RS for DL not sharing an indicated Rel-17 TCI state the same as that for UE-dedicated reception on PDSCH/PDCCH, all QCL rules (Option B1 to Option B3 described below) defined in an existing specification may be supported. For example, for a channel/RS for DL sharing a Rel-17 unified TCI state the same as that for UE-dedicated reception on PDSCH/PDCCH, regarding a source RS and QCL type, a QCL rule of at least one of Option A1 and Option A2 below may be supported.

### {Option A1}

tracking RS (TRS) is configured for a source RS of QCL type A and a CSI-RS (CSI-RS with repetition) for beam management (BM) is configured for a source RS of QCL type D.

### {Option A2}

TRS is configured for a source RS of QCL type A and for a source RS of QCL type D.

QCL rules are defined in an existing specification. For example, for a PDSCH/PDCCH, Option B1 to Option B3 below are allowed.

### {Option B1}

A QCL-type-A RS is of TRS (CSI RS with TRS information (trs-Info)) and a type-D RS is of a CSI-RS with repetition (CSI-RS for BM) .

### {Option B2}

A QCL-type-A RS is of TRS (CSI RS with trs-Info) and a type-D RS is the same as the QCL-type-A RS.

### {Option B3}

A QCL-type-A RS is of a CSI-RS with no trs-Info nor repetition and a type-D RS is the same as the QCL-type-A RS.

For CSI-RS resources in a non-zero power (NZP)-CSI-RS resource set (NZP-CSI-RS-ResourceSet) configured with no trs-Info nor repetition, a UE assumes that a TCI state (TCI-State) indicates one of one or more QCL types below.
- Type A with CSI-RS resources in an NZP-CSI-RS resource set configured with trs-Info and, if applicable, type D with the same CSI-RS resources.
- Type A with CSI-RS resources in an NZP-CSI-RS resource set configured with trs-Info and, if applicable, type D with an SS/PBCH block.
- Type A with CSI-RS resources in an NZP-CSI-RS resource set configured with trs-Info and, if applicable, type D with CSI-RS resources in an NZP-CSI-RS resource set configured with repetition.
- If type D is not applicable, type B with CSI-RS resources in an NZP-CSI-RS resource set configured with trs-Info.

An explicit RRC parameter may be defined to indicate whether a Rel-17 unified TCI state is shared with UE-dedicated reception on PDSCH/PDCCH or with a dynamic grant/configured grant PUSCH and all dedicated PUCCH resources.

### (Search Space Set)

In NR, for a UE, one or more search space (SS) sets are configured. Each SS set is a set of candidates of PDCCH (PDCCH candidates) to be monitored by the UE. The SS set is also referred to as a PDCCH search space set, a search space, or the like.

A UE monitors PDCCH candidates in one or more SS sets. Such one or more SS sets may include at least one of an SS set (common search space (CSS) set) common to one or more UEs and a UE-specific SS set (UE-specific search space (USS) set).

For example, the CSS set may include at least one of the following.
- Type-0-PDCCH CSS set
- Type-OA-PDCCH CSS set
- Type-1-PDCCH CSS set
- Type-2-PDCCH CSS set
- Type-3-PDCCH CSS set

Type-0-PDCCH CSS set may denote a set of CSSs used for monitoring of a DCI format that is cyclic redundancy check (CRC)-scrambled with a System Information-Radio Network Temporary Identifier (SI-RNTI) in a certain cell (for example, primary cell). In the present disclosure, Type-0-PDCCH CSS set may be referred to as Type-0 CSS/CSS set.

Type-0-PDCCH CSS set may be configured, for a UE, based on information (for example, a Radio Resource Control (RRC) parameter "pdcch-ConfigSIB1") in a master information block (MIB) transmitted on a broadcast channel (Physical Broadcast Chanel (PBCH)).

Alternatively, Type-0-PDCCH CSS set may be configured based on information (for example, an RRC parameter "searchSpaceSIB1" or "searchSpaceZero") in information related to a cell-specific PDCCH (cell-dedicated PDCCH information, for example, an RRC parameter "PDCCH-ConfigCommon") .

A UE may be notified of the cell-dedicated PDCCH information by system information (for example, system information block (SIB) 1) or UE-dedicated RRC signaling (for example, configuration information for synchronization (for example, an RRC parameter "ReconfigurationWithSync") in an RRC reconfiguration message).

Type-OA-PDCCH CSS set may denote a set of CSSs used for monitoring of a DCI format that is CRC-scrambled with an SI-RNTI in a certain cell (for example, primary cell). Type-OA-PDCCH CSS set may be configured based on information (for example, an RRC parameter "searchSpaceOtherSystemInformation") in the cell-dedicated PDCCH information. In the present disclosure, Type-0A-PDCCH CSS set may be referred to as Type-0A CSS/CSS set.

Type-1-PDCCH CSS set may denote a set of CSSs used for monitoring of a DCI format that is CRC-scrambled with a Random Access (RA)-RNTI or TC-RNTI in a certain cell (for example, primary cell). Type-1-PDCCH CSS set may be configured based on information (for example, an RRC parameter "ra-SearchSpace") in the cell-dedicated PDCCH information. In the present disclosure, Type-1-PDCCH CSS set may be referred to as Type-1 CSS/CSS set.

Type-2-PDCCH CSS set may denote a set of CSSs used for monitoring of a DCI format that is CRC-scrambled with a Paging (P)-RNTI in a certain cell (for example, primary cell). Type-2-PDCCH CSS set may be configured based on information (for example, an RRC parameter "pagingSearchSpace") in the cell-dedicated PDCCH information. In the present disclosure, Type-2-PDCCH CSS set may be referred to as Type-2 CSS/CSS set.

Type-3-PDCCH CSS set may denote a set of CSSs used for monitoring of at least one of DCI formats that are CRC-scrambled with a Slot Format Indicator (SFI)-RNTI, INT-RNTI, TPC-PUSCH-RNTI, TPC-PUCCH-RNTI, and TPC-SRS-RNTI. Type-3-PDCCH CSS set may be configured based on information (for example, an RRC parameter "SearchSpace") in information related to a UE-specific PDCCH (UE-dedicated PDCCH information, for example, an RRC parameter "PDCCH-Config"). A UE may be notified of the UE-dedicated PDCCH information by UE-dedicated RRC signaling (for example, RRC reconfiguration message). In the present disclosure, Type-3-PDCCH CSS set may be referred to as Type-3 CSS/CSS set.

The USS set may denote a set of USSs used for monitoring of a DCI format that is CRC-scrambled with a C-RNTI or CS-RNTI. The USS set may be configured based on information (for example, the RRC parameter "SearchSpace") in the UE-dedicated PDCCH information.

Each SS set as described above is associated with a control resource set (CORESET). The CORESET may include a plurality of types (for example, CORESET #0, a (cell-dedicated) CORESET (common CORESET) common to one or more UEs, and a UE-dedicated CORESET (specific CORESET)).

CORESET #0 may be configured based on information (for example, an RRC parameter "ControlResourceSetzero") in the MIB or the cell-dedicated PDCCH information described above (for example, the RRC parameter "PDCCH-ConfigCommon"). CORESET #0 may be associated with either a CSS set or USS set.

The common CORESET may be configured based on information (for example, an RRC parameter "commonControlResourceSet") in the cell-dedicated PDCCH information described above (for example, the RRC parameter "PDCCH-ConfigCommon"). The common CORESET may be associated with either a CSS set or USS set.

The UE-dedicated CORESET may be configured based on information (for example, an RRC parameter "ControlResourceSet") in the UE-dedicated PDCCH information described above (for example, the RRC parameter "PDCCH-Config"). Such a CORESET may be associated with either a CSS set or USS set. The maximum number of such CORESETs configurable per bandwidth part (BWP) in a cell may be three, for example.

### (Analysis)

With respect to a Rel-17 TCI state, a unified/common TCI state may mean a Rel-17 TCI state indicated using DCI/MAC CE/RRC (in Rel. 17). In the present disclosure, the indicated Rel-17 TCI state (indicated Rel. 17 TCI sstate) may be interchangeably interpreted as an indicated TCI state or a common TCI state.

The indicated Rel-17 TCI state may be shared with at least one of UE-dedicated reception on PDSCH/PDCC (updated using Rel-17 DCI/MAC CE/RRC), a dynamic grant (DCI)/configured grant PUSCH, and a plurality of (for example, all) dedicated PUCCH resources. A TCI state indicated by DCI/MAC CE/RRC may be referred to as a common TCI state.

With respect to a Rel-17 TCI state, a TCI state other than a unified/common TCI state may mean a Rel-17 TCI state configured using a MAC CE/RRC (in Rel. 17). In the present disclosure, the configured Rel-17 TCI state (configured Rel. 17 TCI state) may be interchangeably interpreted as a configured TCI state or a TCI state other than a common TCI state.

The configured Rel-17 TCI state may not need to be shared with at least one of UE-dedicated reception on PDSCH/PDCC (updated using Rel-17 DCI/MAC CE/RRC), a dynamic grant (DCI)/configured grant PUSCH, and a plurality of (for example, all) dedicated PUCCH resources. The configured Rel-17 TCI state may have a configuration that the configured Rel-17 TCI state is configured, by RRC/MAC CE, per CORESET/per resource/per resource set and, even when the indicated Rel-17 TCI state (common TCI state) described above is updated, the configured Rel-17 TCI state is not updated.

### <CORESET #0>

In Rel. 15, whether to indicate a TCI state for CORESET #0 depends on an implementation of a base station. In Rel. 15, for CORESET #0 with a TCI state indicated, the indicated TCI state is applied. For CORESET #0 with no TCI state indicated, an SSB and QCL selected in the newest (latest) PRACH transmission are applied.

In a common TCI state framework in Rel. 17 or later versions, a TCI state related to CORESET #0 is under study.

For example, in the common TCI state framework in Rel. 17 or later versions, with respect to Rel-17 TCI state indication for COESET #0, whether to apply an indicated Rel-17 TCI state associated with the serving cell may be configured per CORESET by RRC. If the indicated Rel-17 TCI state is not applied, an existing MAC CE/RACH signaling mechanism (legacy MAC CE/RACH signalling mechanism) may be used.

Note that a CSI-RS related to the Rel-17 TCI state applied to CORESET #0 may be QCLed with an SSB related to a serving cell PCI (physical cell ID) (similarly to Rel. 15). For CORESET #0, configuration of only a CSS or configuration of a CSS and USS may be supported. Alternatively, configuration of only a USS may be supported.

Meanwhile, with respect to Rel-17 TCI state indication for COESET #0, an issue is how to control a TCI state in a case that a UE does not support RRC indicating whether to apply an indicated Rel-17 state associated with the serving cell or that RRC is not configured.

### <CORESET #A/#B/#C>

For Rel. 17 or later versions, it is under study to introduce/support classification of CORESET based on a certain condition (such as, for example, whether reception is UE-dedicated/non-UE-dedicated reception).

For example, it is under study that an indicated Rel-17 TCI state is applied to a UE-specific channel/signal (RS). It is under study that a UE is notified, using higher layer signaling (RRC signaling), whether to apply either an indicated Rel-17 TCI state or a configured Rel-17 TCI state to a non-UE-specific channel/signal.

It is under study that an RRC parameter related to the configured Rel-17 TCI state (TCI state ID) has a configuration the same as that of an RRC parameter of a TCI state in Rel. 15/16. It is under study that the configured Rel-17 TCI state is configured/indicated, by using RRC/MAC CE, per CORESET/per resource/per resource set. It is under study that a UE judges such configuration/indication on the basis of a specific parameter.

It is under study that update of an indicated TCI state and update of a configured TCI state are performed separately for a UE. For example, for a UE, when a common TCI state for an indicated TCI state is updated, a configured TCI state need not be updated. It is under study that a UE judges such update on the basis of a specific parameter.

It is under study that, for a PDCCH/PDSCH, application of an indicated Rel-17 TCI state and no application of the indicated Rel-17 TCI state (a configured Rel-17 TCI state is applied or a TCI state configured separately from the indicated Rel-17 TCI state is applied) are switched using higher layer signaling (RRC/MAC CE).

For intra-cell beam indication (indication of a TCI state), it is under study to support an indicated Rel-17 TCI state for a UE-dedicated CORESET and a PDSCH related to the CORESET and for a non-UE-dedicated CORESET and a PDSCH related to the CORESET.

For inter-cell beam indication (for example, L1/L2 inter-cell mobility), it is under study to support an indicated Rel-17 TCI state for a UE-dedicated CORESET and a PDSCH related to the

### CORESET.

For operations related to each Rel-17 TCI state described above, studies have not sufficiently been made on definition of a UE-specific channel/signal and non-UE-specific channel/signal, a UE capability, and the like.

As described above, unless definition of a UE-specific channel/signal and non-UE-specific channel/signal and support/configuration of a UE capability are clear, configuration/indication/application of a TCI state may not be appropriately performed, causing reduction in throughput/degradation in communication quality.

In view of this, the inventors of the present invention studied on a method of applying/configuring a TCI state, and came up with the idea of the present embodiment.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a common beam, a common TCI, a common TCI state, a Rel-17 TCI state, a TCI state in Rel. 17 or later versions, a unified TCI, a unified TCI state, a TCI state to be applied to channels/RSs of a plurality of types, a TCI state to be applied to a plurality of (a plurality of types of) channels/RSs, a TCI state applicable to a plurality of types of channels/RSs, a TCI state for a plurality of types of signals, a TCI state for channels/RSs of a plurality of types, a TCI state, a unified TCI state, a TCI state for UL and DL for joint TCI indication, a UL only TCI state for separate TCI indication, a DL only TCI state for separate TCI indication, a joint TCI state for DL and UL, and separate TCI states for DL and UL may be interchangeably interpreted.

In the present disclosure, a Rel-15/16 TCI state, a TCI state/spatial relation to be applied only to a specific channel/RS, and a TCI state/spatial relation to be applied to a channel/RS of one type may be interchangeably interpreted.

In the present disclosure, a plurality of TCI states configured by an RRC IE, a plurality of TCI states activated by a MAC CE, information related to one or more TCI states, a TCI state configuration, a TCI state pool, an active TCI state pool, a common TCI state pool, a unified TCI state pool, a TCI state list, a unified TCI state list, a joint TCI state pool, a separate TCI state pool, a separate DL/UL TCI state pool, a DL TCI state pool, a UL TCI state pool, a separate DL TCI state pool, and a separate UL TCI state pool may be interchangeably interpreted.

In the present disclosure, DL TCI, DL only TCI, separate DL only TCI, DL common TCI, DL unified TCI, common TCI, and unified TCI may be interchangeably interpreted. In the present disclosure, UL TCI, UL only TCI, separate UL only TCI, UL common TCI, UL unified TCI, common TCI, and unified TCI may be interchangeably interpreted.

In the present disclosure, a channel/RS to which a unified TCI state is applied may be a PDSCH/PDCCH/CSI-RS/PUSCH/PUCCH/SRS.

In the present disclosure, UE-dedicated reception on PDSCH/PDCCH, reception of a PDSCH/PDCCH based on a PDSCH configuration (PDSCH-Config)/PDCCH configuration (PDCCH-Config), a UE-dedicated PDSCH/PDCCH, and a UE-dedicated PDSCH/PDCCH resource may be interchangeably interpreted. In the present disclosure, a PUSCH based on a dynamic grant/configured grant, a PUSCH based on a PUSCH configuration (PUSCH-Config)/configured grant configuration (ConfiguredGrantConfig), a UE-dedicated PUSCH, and a UE-dedicated PUSCH resource may be interchangeably interpreted. In the present disclosure, a dedicated PUCCH resource, a PUCCH resource based on a PUCCH configuration (PUCCH-Config), a UE-dedicated PUCCH, and a UE-dedicated PUCCH resource may be interchangeably interpreted.

### (Radio Communication Method)

In the embodiments, a unified TCI state, a common TCI state, a Rel-17 TCI state to be indicated, and an indicated Rel-17 TCI state may be interchangeably interpreted.

In the embodiments, a search space, a search space set, a search space configuration, and a CORESET associated with a search space set may be interchangeably interpreted. In the embodiments, a UE-specific search space set and a terminal-specific search space set may be interchangeably interpreted. In the embodiments, a CSS set and a CSS set of Type-0/0A/1/2/3 may be interchangeably interpreted.

In the present disclosure, CORESET A/B/C is defined. The name of each CORESET is only an example and not limited to these.

In the present disclosure, CORESET A may mean a CORESET related to UE-dedicated reception other than a specific CORESET (for example, CORESET #0). Such UE-dedicated reception may be UE-dedicated reception on PDCCH in a certain CC (cell).

CORESET A may be associated with a USS and a specific type of CSS (for example, Type-3 CSS) (for example, CORESET with USS + CSS type 3). Alternatively, CORESET A may be associated only with a USS (for example, CORESET with USS only). CORESET A may be associated only with a specific type of CSS (for example, Type-3 CSS) (for example, CORESET with CSS type 3 only).

In the present disclosure, CORESET B may mean a CORESET related to non-UE-dedicated reception other than a specific CORESET (for example, CORESET #0). Such non-UE-dedicated reception may be non-UE-dedicated reception on PDCCH in a certain CC (cell).

CORESET B may be associated with a CSS (for example, CORESET with CSS only) or a CSS of a type other than a specific type (for example, Type-3) (for example, CORESET with CSS other than CSS type 3). Alternatively, CORESET B may be associated with any CSS (for example, CSS including Type-3).

In the present disclosure, CORESET C may mean a CORESET related to UE-dedicated and non-UE-dedicated reception other than a specific CORESET (for example, CORESET #0). Such UE-dedicated reception may be UE-dedicated and non-UE-dedicated reception on PDCCH in a certain CC (cell). Alternatively, CORESET C may be a CORESET including both of content/element of CORESET A and content/element of CORESET B.

Note that the definition of CORESET A/B/C is not limited to this. CORESET A/B/C may be defined corresponding to at least respective different USS/CSSs or different CSS types.

The definition of CORESET A/B/C as described above allows operation of a UE to be defined without prohibiting any configuration allowed in Rel. 15/16 even when the framework is updated from the TCI state framework in Rel. 15/16 to the TCI state framework in Rel. 17.

For reception of any PDCCH and each PDSCH in CORESET A, a UE may apply an indicated Rel-17 TCI state.

For reception of any PDCCH and each PDSCH in CORESET B, a UE may receive, using RRC (RRC IE), information that is determined per CORESET and that is related to whether to apply an indicated Rel-17 TCI state related to the serving cell.

A UE may receive, using higher layer signaling (RRC signaling/MAC CE), at least one of configuration information (which may be referred to as first configuration information) related to one or more CORESETs (for example, CORESET #0/A/B/C) and configuration information (which may be referred to as second configuration information) related to one or more search spaces (search space sets).

The first configuration information may at least include, for example, information related to a CORESET to be monitored by the UE. The second configuration information may include information related to a search space set corresponding to the CORESET. The information related to the CORESET and the information related to the search space set corresponding to the CORESET may be included in an identical RRC parameter. In this case, the first configuration information and the second configuration information may be considered collectively as one piece of configuration information.

A Rel-17 TCI state for CORESET #0 may be indicated for a UE using RRC/MAC CE.

### <First Embodiment>

A first embodiment relates to CORESET #0 (CORESET 0).

In the common TCI state framework in Rel. 17 or later versions, with respect to Rel-17 TCI state indication for COESET #0, whether to apply an indicated Rel-17 TCI state associated with the serving cell may be configured per CORESET by RRC (Rule 1-1). The configuration by RRC may be configured for a UE from a base station.

In a case that the Rel-17 TCI state is not applied (or that the configuration by RRC is not applied), the base station/UE may apply an existing MAC CE/RACH signaling mechanism (legacy MAC CE/RACH signalling mechanism) (Rule 1-2). Note that the Rel-17 TCI state may be referred to as a TCI state in Rel. 17 or later versions.

In a case that whether to apply the indicated Rel-17 TCI state related to the serving cell is configured per CORESET by RRC, whether the RRC (or RRC parameter) is configured or whether the configuration by the RRC is supported may be reported from the UE to the base station by using a UE capability.

When a UE capability corresponding to a function (for example, the configuration by the RRC) related to Rule 1-1 is not reported, Rule 1-2 may be applied.

Alternatively, when the UE capability corresponding to the function (for example, the configuration by the RRC) related to Rule 1-1 is not reported, Rule 1-3, which is another one, different form Rule 1-2 may be applied. Rule 1-3 may be, for example, a rule that the indicated Rel-17 TCI state is applied all the time.

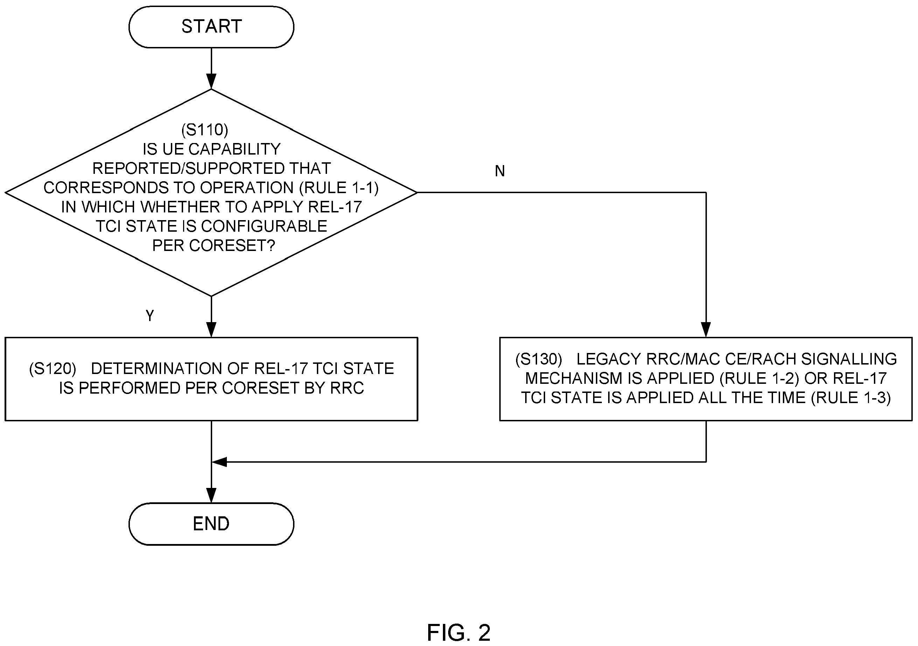

FIG. 2 is a diagram to show an example of determination of application of a TCI state according to the first embodiment. Whether a UE capability corresponding to a function (for example, the configuration by the RRC) related to Rule 1-1 is reported/supported is judged (S110). If the UE capability is reported/supported, determination of a Rel-17 TCI state is performed per CORESET by RRC (S120). In contrast, if the UE capability corresponding to the function related to Rule 1-1 is not reported/supported, Rule 1-2 or Rule 1-3 is applied.

As described above, the UE capability corresponding to Rule 1-1 is defined and configuration/application of TCI states is controlled based on whether the UE capability is reported, allowing TCI states to be appropriately configured/applied depending on respective UE capabilities of terminals.

### <Second Embodiment>

A second embodiment relates to CORESET C.

In the common TCI framework in Rel. 17 or later versions, when an indicated Rel-17 TCI state is applied to PDCCH reception and PDSCH reception corresponding to the PDCCH reception, CORESET A/B/C may be supported.

For indication of a Rel-17 TCI state, the following rules may be supported for the respective CORESET determinations. Note that First Rule 2-1 may be applied to CORESET A (for example, USS/Type-3 CSS), that Second Rule 2-2 may be applied to CORESET B (for example, CSS or CSS other than Type-3), and that Third Rule 2-3 may be applied to CORESET C (for example, CSS and USS).

For PDCCH reception for CORESET A and PDSCH reception corresponding to the PDCCH reception, a UE applies the indicated Rel-17 TCI state all the time (First Rule 2-1).

For PDCCH reception for CORESET B and PDSCH reception corresponding to the PDCCH reception, whether the UE applies the indicated Rel-17 TCI state related to the serving cell may be determined per CORESET by RRC (Second Rule 2-2).

For PDCCH reception for CORESET C and PDSCH reception corresponding to the PDCCH reception, Third Rule 2-3 may be applied.

### {Option 2-1}

Third Rule 2-3 applied to CORESET C may be a same/common rule as that applied to a different CORESET (for example, CORESET B, CORESET #0).

For example, Third Rule 2-3 may be the same as Second Rule 2-2 applied to CORESET B. In other words, for PDCCH reception for CORESET C and PDSCH reception corresponding to the PDCCH reception, whether the UE applies the indicated Rel-17 TCI state related to the serving cell may be determined per CORESET by RRC.

Specifically, in the Rel-17 common TCI framework, a case is assumed where application of the indicated Rel-17 TCI state is supported for PDCCH reception and each PDSCH reception for a CORESET (for example, CORESET C) other than CORESET #0 associated with both UE-dedicated and non-UE-dedicated reception on PDCCH in a CC. In this case, whether to apply the indicated Rel-17 TCI state related to the serving cell may be determined per CORESET by RRC.

In a case that the Rel-17 TCI state is not applied (or that configuration by RRC is not applied), the base station/UE may be applied with an existing MAC CE/RACH signaling mechanism (legacy MAC CE/RACH signalling mechanism).

In a case of applying Option 2-1, the same operation (rule) can be applied to CORESET #0 supporting a CSS and USS and to CORESET C.

### {Option 2-2}

Third Rule 2-3 applied to CORESET C may be a same/common rule as that applied to a different CORESET (for example, CORESET A).

For example, Third Rule 2-3 may be the same as Second Rule 2-1 applied to CORESET A. In other words, for PDCCH reception for CORESET C and PDSCH reception corresponding to the PDCCH reception, the UE may apply the indicated Rel-17 TCI state all the time.

Specifically, in the Rel-17 common TCI framework, a case is assumed where application of the indicated Rel-17 TCI state is supported for PDCCH reception and each PDSCH reception for a CORESET (for example, CORESET C) other than CORESET #0 associated with both UE-dedicated and non-UE-dedicated reception on PDCCH in a CC. In this case, the UE applies the indicated Rel-17 TCI state all the time.

In Option 2-1, a UE capability related to Rule 2-3 (or Rule 2-2/Rule 1-1) applied to CORESET C may be configured and the UE capability may be reported from the UE to the base station.

For example, the UE may report whether Rule 2-3 (or Rule 2-2/Rule 1-1) applied to CORESET C is possible to be supported, by using the UE capability. The UE capability may be performed based on a certain unit. The certain unit may be at least one of "per UE," "per band," "per band combination," "per band in band combination," and "per CC per band in band combination."

A UE not supporting Rule 2-3 (or Rule 2-2/Rule 1-1) applied to CORESET C shown in Option 2-1 may apply another rule. For example, such another rule may be Rule 2-3 (or Rule 2-1) applied to CORESET C shown in Option 2-1.

With this, a terminal having a certain UE capability can apply the same rule/operation to CORESET #0 and CORESET C, and a terminal not having the certain UE capability can apply a rule/operation with a small UE load.

### {Variations}

Option 2-1 and Option 2-2 may be switched for application. For example, higher layer signaling (RRC signaling) indicating switching between Option 2-1 and Option 2-2 may be defined, and a UE may switch, by the higher layer signaling, Option 2-1 and Option 2-2 for application. This allows a TCI state of CORESET C to be appropriately (or flexibly) determined based on respective UE capabilities of terminals.

Note that, although the second embodiment describes CORESET C, the second embodiment may be applied to a different CORESET (for example, CORESET B/CORESET #0). The UE capability/RRC signaling described in the second embodiment may be reported/configured separately for a plurality of CORESETs (for example, CORESET C/CORESET B/CORESET #0) or may be reported/configured commonly for the plurality of CORESETs.

The present embodiment may be commonly applied/configured or separately applied/configured for intra-cell (intra cell) and inter-cell (inter cell).

### <Third Embodiment>

A third embodiment relates to configuration of a plurality of search space set types (USS + CSS) for a CORESET and to a UE capability.

In the Rel-17 common TCI framework, a case is assumed where application of an indicated Rel-17 TCI state is supported for PDCCH reception and each PDSCH reception for a CORESET (for example, CORESET C) other than CORESET #0 associated with both UE-dedicated and non-UE-dedicated reception on PDCCH in a CC. In this case, whether to apply the indicated Rel-17 TCI state related to the serving cell is configured per CORESET by RRC. If the indicated Rel-17 TCI state is not applied, an existing MAC CE/RRC/RACH signaling mechanism is used. A CSI-RS related to the Rel-17 TCI state applied to the CORESET may be QCLed with an SSB related to a serving cell PCI. Support of such a function is optional for a UE.

For a specific CORESET (for example, CORESET #0), configuration of both a USS and CSS is supported. In this case, for a different CORESET (for example, CORESET C) other than the specific CORESET, support of both a USS and CSS may be optional. UE capability information on whether configuration of both a USS and CSS is supported for the different CORESET may be defined.

For example, at least one of the following two UE capabilities 3-1 and 3-2 may be defined, and, when the UE capability is not reported (or the UE capability is not supported), control may be made to perform a certain operation.

### {UE Capability 3-1}

In intra-cell and inter-cell beam management (intra-cell and inter-cell BM), for a different CORESET except CORESET #0 (or for all the other CORESETs), UE capability information indicating support of whether the Rel-17 TCI state (for example, the indicated Rel-17 TCI state) is applied per CORESET by RRC may be introduced/defined. In other words, for all the other CORESETs except CORESET #0, the UE optionally supports RRC configuration on whether to apply the Rel-17 TCI state (for example, the indicated Rel-17 TCI state) per CORESET.

In a case of not having such UE capability information (for example, not supporting whether the Rel-17 TCI state is applied per CORESET based on RRC), the UE may apply the indicated Rel-17 TCI state all the time with respect to all the other CORESETs. For example, the UE may perform control to apply the indicated Rel-17 TCI state to all the other CORESETs except CORESET #0 and to corresponding PDSCHs scheduled.

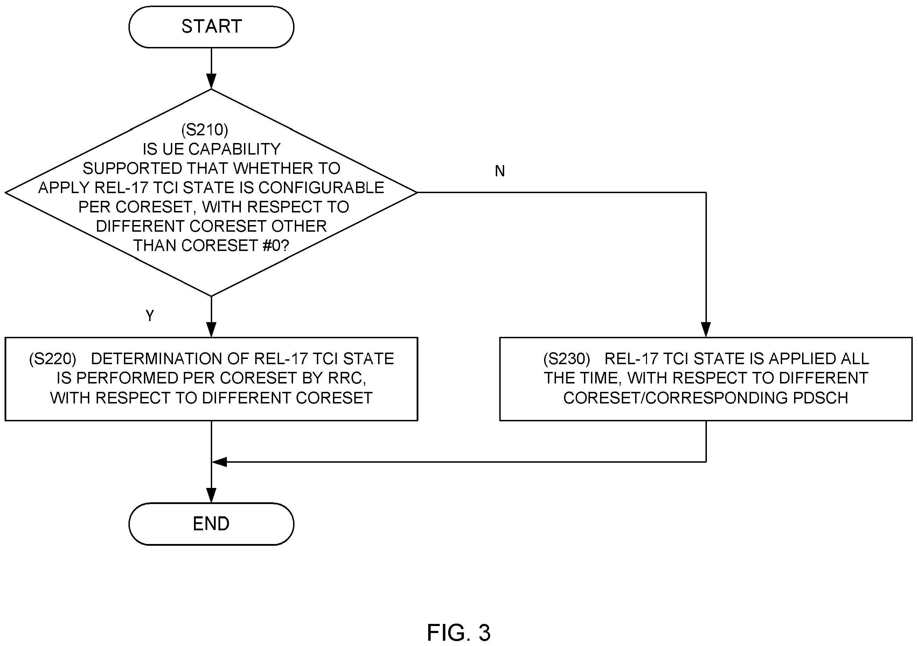

FIG. 3 is a diagram to show an example of determination of application of a TCI state based on UE capability 3-1. Whether UE capability 3-1 is reported/supported is judged (S210). If UE capability 3-1 is reported/supported, determination of a Rel-17 TCI state is performed per CORESET by RRC, with respect to a different CORESET (S220). In contrast, if UE capability 3-1 is not reported/supported, the indicated Rel-17 TCI state may be applied all the time, with respect to all the other CORESETs/corresponding PDSCHs (S230).

A different CORESET except CORESET #0 (for example, all the other CORESETs) may be, for example, CORESET A/B/C. Alternatively, all the other CORESETs except CORESET #0 may be specific CORESETs.

Each specific CORESET may be, for example, a CORESET (for example, CORESET C) for which configuration of both a USS and CSS is supported, or may be configured not to include CORESET A/B. In this case, UE capability 3-1 need not be applied to CORESET A supporting only a USS/CORESET C supporting only a CSS.

### {UE Capability 3-2}

At least in intra-cell beam management (intra-cell BM), for a UE, UE capability information indicating support of whether the Rel-17 TCI state (for example, the indicated Rel-17 TCI state) is applied per CORESET by RRC with respect to CORESET #0 may be introduced/defined. In other words, with respect to CORESET #0, the UE optionally supports RRC configuration on whether to apply the Rel-17 TCI state (for example, the indicated Rel-17 TCI state) per CORESET.

In a case of not having such UE capability information (for example, not supporting whether the Rel-17 TCI state is applied per CORESET based on RRC), the UE may apply the indicated Rel-17 TCI state all the time with respect to CORESET #0. For example, the UE may perform control to apply the indicated Rel-17 TCI state to CORESET #0 and to a corresponding PDSCH scheduled.

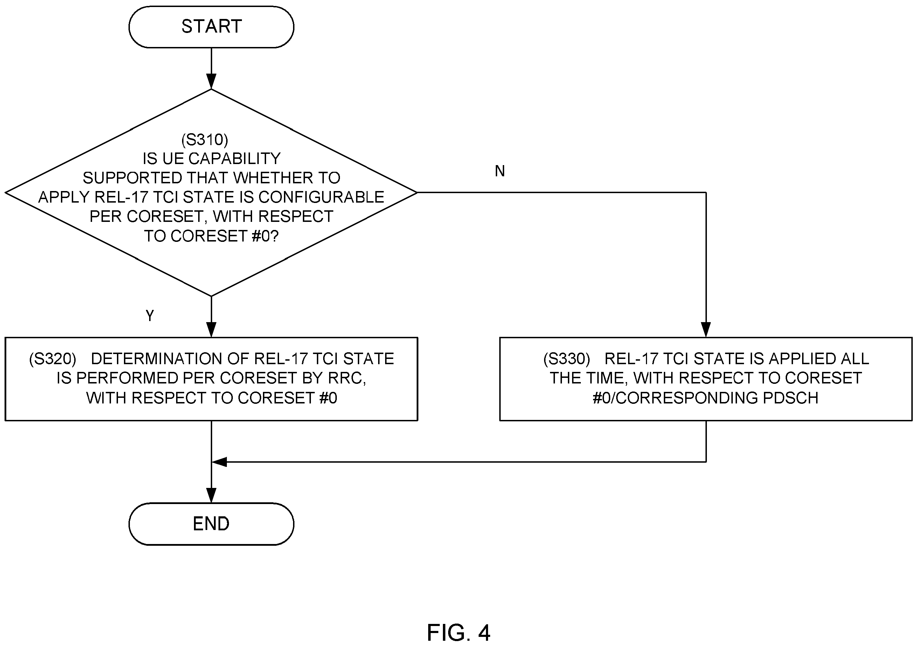

FIG. 4 is a diagram to show an example of determination of application of a TCI state based on UE capability 3-2. Whether UE capability 3-2 is reported/supported is judged (S310). If UE capability 3-2 is reported/supported, determination of a Rel-17 TCI state is performed per CORESET by RRC, with respect to CORESET #0 (S320). In contrast, if UE capability 3-2 is not reported/supported, the indicated Rel-17 TCI state may be applied all the time, with respect to CORESET #0/corresponding PDSCH (S330).

Both UE capability 3-1 and UE capability 3-2 (or both an operation in a case of not meeting UE capability 3-1 and an operation in a case of not meeting UE capability 3-2) may be defined/supported, or only either one of them may be supported.

Although UE capability 3-1 and UE capability 3-2 are respectively defined for CORESET C and CORESET #0, the present disclosure is not limited to this. UE capability 3-1 and UE capability 3-2 may be respectively applied to CORESET C and CORESET #0, or may be applied to only either one of CORESET C and CORESET #0.

In a case where UE capability 3-1 and UE capability 3-2 are respectively applied to CORESET C and CORESET #0, respective UE capabilities (for example, UE capability 3-1/3-2) corresponding to the CORESETs may be reported (for example, respective feature groups (FGs) reporting whether support is possible may be defined for CORESET C and CORESET #0). Alternatively, in the case where UE capability 3-1 and UE capability 3-2 are respectively applied to CORESET C and CORESET #0, a UE capability (for example, FG) common to CORESET C and CORESET #0 may be reported.

### <Fourth Embodiment>

A fourth embodiment relates to configuration of a CORESET in a case of not reporting (or not supporting) a certain UE capability. Note that a fourth aspect may be combined with any one of first to third aspects for application.

In a case of not reporting (or not supporting) a certain UE capability, a certain CORESET need not be configured. The certain CORESET may be CORESET C, for example.

In this case, in the case of not reporting (or not supporting) the certain UE capability, a UE need not assume that CORESET C is configured. In other words, the UE may assume that either CORESET A or CORESET B is configured.

For example, at least one of the following two UE capabilities 4-1 and 4-2 may be defined, and, when the UE capability is not reported (or the UE capability is not supported), control may be made to perform a certain operation (for example, operation of not configuring CORESET C).

### {UE Capability 4-1}

In intra-cell and inter-cell beam management (intra-cell and inter-cell BM), for all the CORESETs except CORESET #0, UE capability information indicating support of whether the Rel-17 TCI state (for example, the indicated Rel-17 TCI state) is applied per CORESET by RRC may be introduced/defined. In other words, for all the CORESETs except CORESET #0, a UE optionally supports RRC configuration on whether to apply the Rel-17 TCI state (for example, the indicated Rel-17 TCI state) per CORESET.

In a case of not having such UE capability information (for example, not supporting whether the Rel-17 TCI state is applied per CORESET based on RRC), the UE need not expect/assume that a CORESET supporting both a CSS and USS besides CORESET #0 is configured.

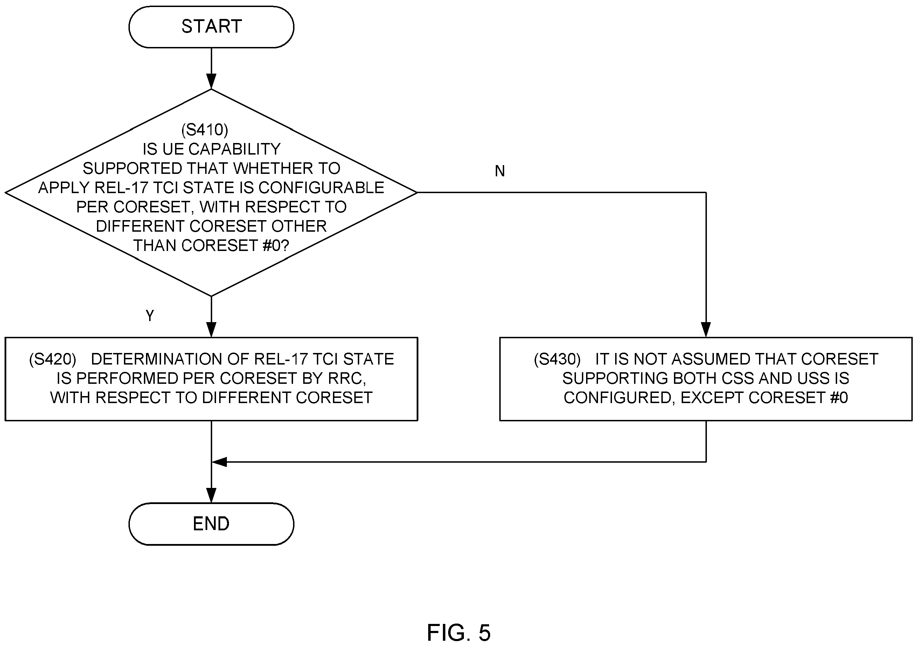

FIG. 5 is a diagram to show an example of determination of application of a TCI state based on UE capability 4-1. Whether UE capability 4-1 is reported/supported is judged (S410). If UE capability 4-1 is reported/supported, determination of a Rel-17 TCI state is performed per CORESET by RRC, with respect to a different CORESET (S420). In contrast, if UE capability 4-1 is not reported/supported, the UE need not expect/assume that, except CORESET #0, a CORESET supporting both a CSS and USS is configured (S430).

### {UE Capability 4-2}

At least in intra-cell beam management (intra-cell BM), for a UE, UE capability information indicating support of whether the Rel-17 TCI state (for example, the indicated Rel-17 TCI state) is applied per CORESET by RRC with respect to CORESET #0 may be introduced/defined. In other words, with respect to CORESET #0, the UE optionally supports RRC configuration on whether to apply the Rel-17 TCI state (for example, the indicated Rel-17 TCI state) per CORESET.

In a case of not having such UE capability information (for example, not supporting whether the Rel-17 TCI state is applied per CORESET based on RRC), the UE need not expect/assume that, with respect to CORESET #0, a CORESET supporting both a CSS and USS is configured.

For example, in this case, the UE may assume that only CSS/only USS is configured for CORESET #0.

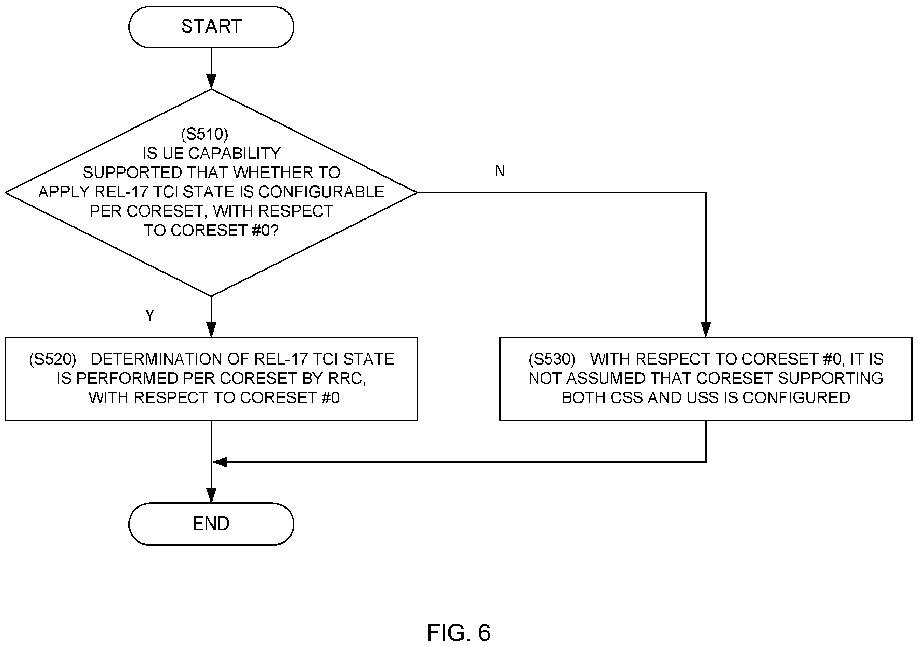

FIG. 6 is a diagram to show an example of determination of application of a TCI state based on UE capability 4-2. Whether UE capability 4-2 is reported/supported is judged (S510). If UE capability 4-2 is reported/supported, determination of a Rel-17 TCI state is performed per CORESET by RRC, with respect to CORESET #0 (S520). In contrast, if UE capability 4-2 is not reported/supported, the UE need not expect/assume that, with respect to CORESET #0, a CORESET supporting both a CSS and USS is configured (S530).

### <<Case of Defining Both UE Capability 4-1 and UE Capability 4-2>>

Both UE capability 4-1 (or an operation in a case of not meeting UE capability 4-1) and UE capability 4-2 (or an operation in a case of not meeting UE capability 4-2) may be defined/supported.

In the case of not reporting UE capability 4-1 (or not supporting UE capability 4-1), a UE does not assume that both a CSS and USS are configured for a certain CORESET, in CORESETs other than CORESET #0. In other words, the UE may assume that only either one of a CSS or USS is configured, in CORESETs other than CORESET #0.

In the case of not reporting UE capability 4-2 (or not supporting UE capability 4-2), the UE does not assume that both a CSS and USS are configured for a certain CORESET, in CORESET #0. In other words, it may be assumed that only either one of a CSS or USS is configured, in CORESET #0.

### <<Case of Defining Either UE Capability 4-1 or UE Capability 4-2>>

Only either one of UE capability 4-1 (or an operation in a case of not meeting UE capability 4-1) and UE capability 4-2 (or an operation in a case of not meeting UE capability 4-2) may be defined/supported.

Assuming a case where only UE capability 4-1 (or an operation in a case of not meeting UE capability 4-1) is defined.

In the case of not reporting UE capability 4-1 (or not supporting UE capability 4-1), a UE does not assume that both a CSS and USS are configured for a certain CORESET, in CORESETs other than CORESET #0. In other words, the UE may assume that only either one of a CSS or USS is configured, in CORESETs other than CORESET #0. In this case, the UE may assume that both a CSS and USS are configured for a certain CORESET, in CORESET #0. In other words, regardless of whether the UE capability is reported, both a CSS and USS may be supported, with respect to CORESET #0.

Alternatively, in the case of not reporting UE capability 4-1 (or not supporting UE capability 4-1), the UE need not assume that both a CSS and USS are configured for a certain CORESET, in all the CORESETs (for example, CORESET #0/A/B/C). In other words, the UE may assume that only either one of a CSS or USS is configured, in one CORESET. In this case, the UE does not assume that both a CSS and USS are configured for a certain CORESET. In other words, it is assumed that only either one of a CSS or USS is configured, in a certain CORESET #0. Thus, with whether the UE capability is reported (or reported value), it is possible to switch whether both a CSS and USS are possible to be configured for CORESET #0 and the other CORESETs. Note that such an operation may be applied to a case where only UE capability 4-2 is defined and such UE capability 4-2 is not reported (or UE capability 4-1 is not supported).

In the embodiments described above, CORESETs except CORESET #0 (or all the CORESETs) may include CORESET A/B/C. Alternatively, CORESETs except CORESET #0 may be applied only to CORESET C (or every CORESET C).

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

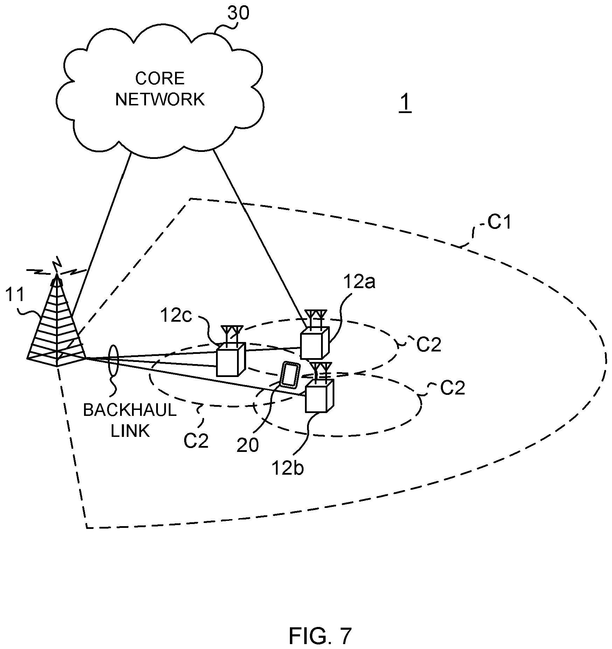

FIG. 7 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a reference signal for measurement (Sounding Reference Signal (SRS)), a demodulation reference signal (DMRS), and so on may be communicated as an uplink reference signal (UL-RS). Note that DMRS may be referred to as a "user terminal specific reference signal (UE-specific Reference Signal)."

### (Base Station)

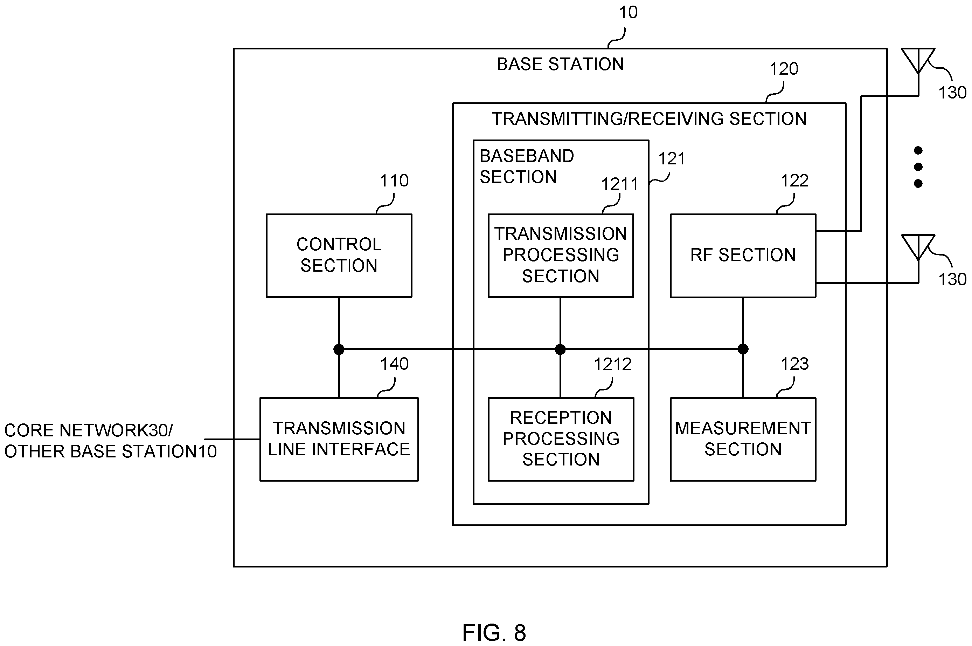

FIG. 8 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, demapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit indication of a transmission configuration indication (TCI) state to be applied to a plurality of types of channels and configuration information related to a control resource set (CORESET). The configuration information may at least include, for example, a CORESET to be monitored by a UE, and in addition include information related to a search space set corresponding to the CORESET.

The control section 110 may control configurations of a CORESET with a certain index and a different CORESET except the CORESET with the certain index and control TCI states corresponding to the CORESET with the certain index and the different CORESET, on the basis of at least one of a first terminal capability and a second terminal capability, the first terminal capability being related to whether to support an operation of configuring per CORESET whether to apply the TCI state, with respect to the different CORESET, and the second terminal capability being related to whether to support the operation of configuring per CORESET whether to apply the TCI state, with respect to the CORESET with the certain index.

### (User Terminal)

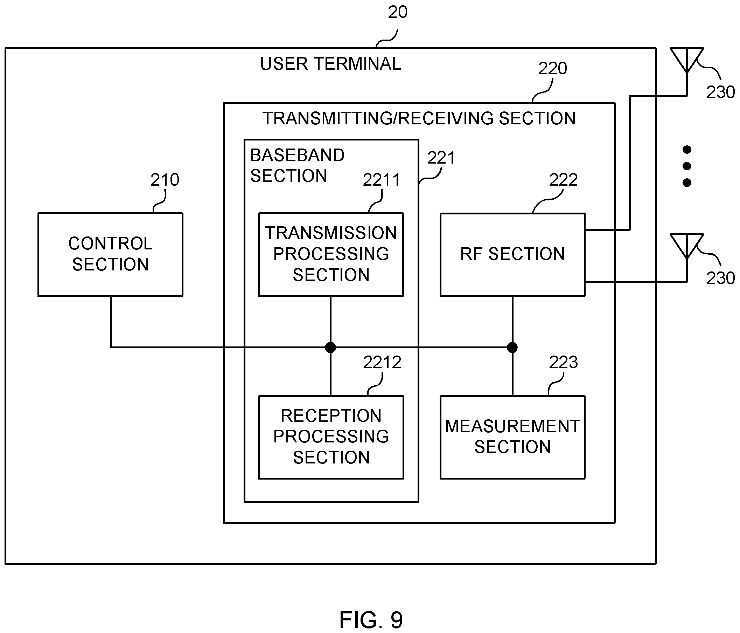

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, demapping, demodulation, decoding (which may include error correction decoding), MAC layer processing, or the processing of the RLC layer and the processing of the PDCP layer, on the acquired baseband signal, and acquire user data and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive indication of a transmission configuration indication (TCI) state to be applied to a plurality of types of channels and configuration information related to a control resource set (CORESET). The configuration information may at least include, for example, a CORESET to be monitored by a UE, and in addition include information related to a search space set corresponding to the CORESET.

The control section 210 may control monitoring of at least one of a CORESET with a certain index and a different CORESET except the CORESET with the certain index, on the basis of at least one of a first terminal capability and a second terminal capability, the first terminal capability being related to whether to support an operation of configuring per CORESET whether to apply the TCI state, with respect to the different CORESET, and the second terminal capability being related to whether to support the operation of configuring per CORESET whether to apply the TCI state, with respect to the CORESET with the certain index.

When information on the first terminal capability is not supported, the control section 210 may perform control to apply the TCI state to the different CORESET.

When information on the first terminal capability is not supported, the control section 210 may assume that, except the CORESET with the certain index, no CORESET supporting both a UE-specific search space set and a common search space set is configured.

When information on the second terminal capability is not supported, the control section 210 may perform control to apply the TCI state to the CORESET with the certain index.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

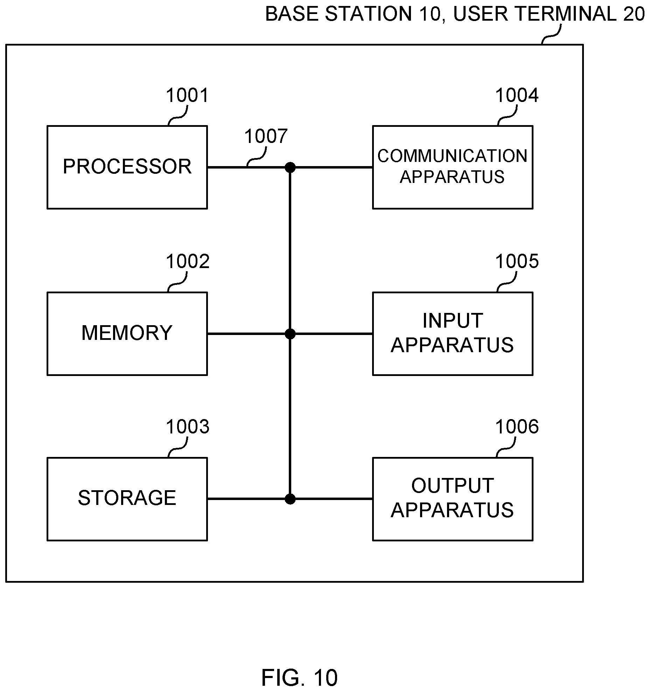

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, specific filter processing performed by a transceiver in the frequency domain, specific windowing processing performed by a transceiver in the time domain, and the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and the like may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of certain information (for example, notification of "being X") does not necessarily have to be notified explicitly, and can be notified implicitly (by, for example, not notifying this certain information or notifying another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

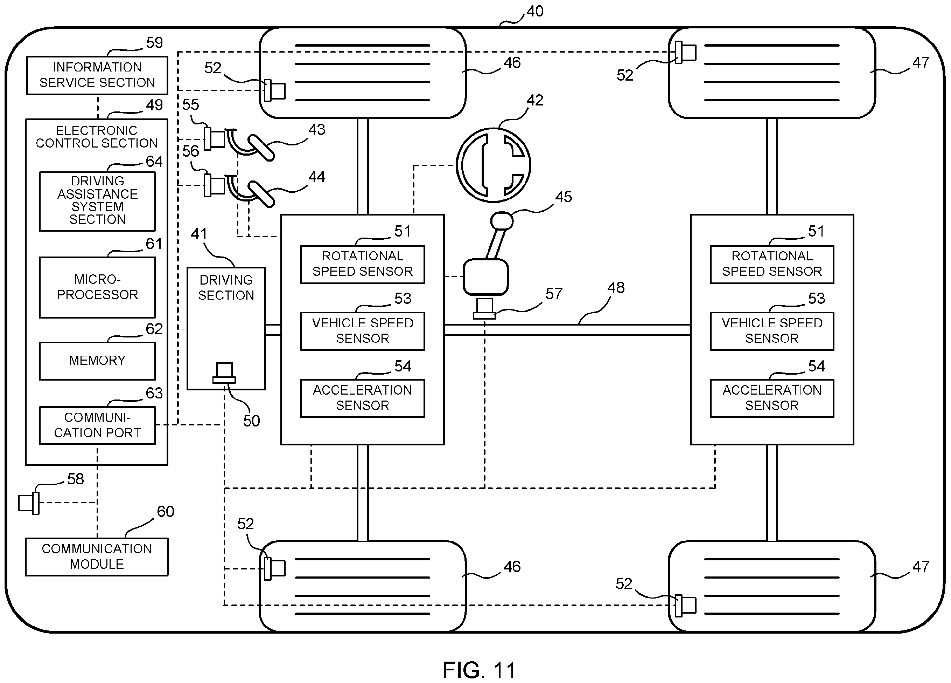

FIG. 11 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel, and so on may be interpreted as a sidelink channel.

Likewise, the user terminal in the present disclosure may be interpreted as base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of operations. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some operations.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

The present application is based on Japanese Patent Application No. 2022-028484 filed on February 25, 2022, the entire contents of which are incorporated herein by reference.

## Claims

1. A terminal comprising:
a receiving section that receives indication of a transmission configuration indication (TCI) state to be applied to a plurality of types of channels and configuration information related to a control resource set (CORESET); and
a control section that controls monitoring of at least one of a CORESET with a certain index and a different CORESET except the CORESET with the certain index, on the basis of at least one of a first terminal capability and a second terminal capability, the first terminal capability being related to whether to support an operation of configuring per CORESET whether to apply the TCI state, with respect to the different CORESET, and the second terminal capability being related to whether to support the operation of configuring per CORESET whether to apply the TCI state, with respect to the CORESET with the certain index.

2. The terminal according to claim 1, wherein
when information on the first terminal capability is not supported, the control section performs control to apply the TCI state to the different CORESET.

3. The terminal according to claim 1, wherein
when information on the first terminal capability is not supported, the control section assumes that, except the CORESET with the certain index, no CORESET supporting both a UE-specific search space set and a common search space set is configured.

4. The terminal according to any one of claims 1 to 3, wherein
when information on the second terminal capability is not supported, the control section performs control to apply the TCI state to the CORESET with the certain index.

5. A radio communication method for a terminal, the radio communication method comprising:
receiving indication of a transmission configuration indication (TCI) state to be applied to a plurality of types of channels and configuration information related to a control resource set (CORESET); and
controlling monitoring of at least one of a CORESET with a certain index and a different CORESET except the CORESET with the certain index, on the basis of at least one of a first terminal capability and a second terminal capability, the first terminal capability being related to whether to support an operation of configuring per CORESET whether to apply the TCI state, with respect to the different CORESET, and the second terminal capability being related to whether to support the operation of configuring per CORESET whether to apply the TCI state, with respect to the CORESET with the certain index.

6. A base station comprising:
a transmitting section that transmits indication of a transmission configuration indication (TCI) state to be applied to a plurality of types of channels and configuration information related to a control resource set (CORESET); and
a control section that, on the basis of at least one of a first terminal capability and a second terminal capability, controls configurations of a CORESET with a certain index and a different CORESET except the CORESET with the certain index and controls TCI states corresponding to the CORESET with the certain index and the different CORESET, the first terminal capability being related to whether to support an operation of configuring per CORESET whether to apply the TCI state, with respect to the different CORESET, and the second terminal capability being related to whether to support the operation of configuring per CORESET whether to apply the TCI state, with respect to the CORESET with the certain index.
